Europäisches Patentamt

European Patent Office

Office européen des brevets

(19)

(11) Numéro de publication: **0 019 498**
**B1**

(12) **FASCICULE DE BREVET EUROPEEN**

(45) Date de publication du fascicule du brevet: **21.09.83**

(51) Int. Cl.³: **B 62 D 33/06**

(21) Numéro de dépôt: **80400481.0**

(22) Date de dépôt: **10.04.80**

(54) Dispositif de suspension d'une cabine, sur le châssis d'un véhicule.

(30) Priorité: **09.05.79 FR 7911774**

(43) Date de publication de la demande:
**26.11.80 Bulletin 80/24**

(45) Mention de la délivrance du brevet:
**21.09.83 Bulletin 83/38**

(84) Etats contractants désignés:
**AT BE CH DE GB IT LI LU NL SE**

(56) Documents cités:
**DE - A - 1 780 211**
**DE - A - 1 926 779**
**DE - A - 2 161 952**
**FR - A - 1 303 275**
**FR - A - 1 407 464**
**GB - A - 1 096 554**
**US - A - 3 321 236**
**US - A - 3 554 596**

(73) Titulaire: **UNIC S.A. Société anonyme dite:**
**6, rue Nicolas Copernic**
**F-78190 Trappes (FR)**

(72) Inventeur: **Salmon, Claude B.**
**59, rue Henri Bèque**
**F-78160 Marly-le-Roi (FR)**

(74) Mandataire: **Moulines, Pierre et al,**
**Cabinet BEAU de LOMENIE 55, rue d'Amsterdam**
**F-75008 Paris (FR)**

Courier Press, Leamington Spa, England.

## Dispositif de suspension d'une cabine, sur le châssis d'un véhicule

La présente invention a pour objet un dispositif de suspension d'une cabine, sur le châssis d'un véhicule.

Lors des recherches qui ont été menées sur les vibrations de la masse suspendue d'une cabine de véhicule, on a pu mettre en évidence les modes de flexion du cadre et l'existence de noeuds de vibration à l'arrière de l'essieu arrière, ainsi qu'à l'arrière de la cabine. On s'aperçoit alors que l'extrémité avant du châssis est le foyer d'importantes amplitudes d'oscillations.

Il apparaît donc qu'une amélioration efficace du confort peut résulter de la seule intervention sur la suspension avant de la cabine. Les amplitudes relevées à l'arrière étant nettement plus faibles, la fréquence propre peut y être importante.

La bande de fréquence physiologiquement gênante est connue et elle s'étend de 3 à 8 Hz pour les oscillations verticales.

La suspension avant doit donc être caractérisée par une fréquence propre inférieure à 3 Hz et, de préférence, aussi proche que possible de 1 Hz.

Toutefois, l'accroissement de la flexibilité des éléments de suspension de la cabine a pour conséquence inévitable d'augmenter l'instabilité en roulis de la masse suspendue.

La présente invention a pour objet une suspension permettant de répondre à ces différents critères.

Le brevet US—A—3.554.596 concerne un dispositif dans lequel l'un des modes de réalisation se rapporte à une fixation de cabine sur un châssis par quatre points dont deux points à l'avant comportant des moyens élastiques à basse fréquence et deux points articulés à l'arrière.

Suivant un autre mode de réalisation, il est prévu une suspension en trois points, mais l'organe élastique central à basse fréquence est situé à l'arrière et les deux points situés à l'avant sont de simples articulations.

Or, il a été mentionné ci-dessus que c'est à l'extrémité avant de la cabine que l'on constate d'importantes amplitudes d'oscillations.

Il apparait donc qu'une amélioration efficace du confort peut résulter de la seule intervention sur la suspension avant de la cabine, les amplitudes relevées à l'arrière étant nettement plus faibles.

Or, dans le brevet US—A—3.554.996, il n'est pas fait mention d'une suspension avant centrale avec un moyen élastique à basse fréquence, comme il a été mentionné ci-dessus.

Toutefois et cela ne figure pas dans le brevet US—A—3.554.996, cette suspension centrale avant accroît la flexibilité des éléments de suspension et a pour conséquence d'augmenter l'instabilité en roulis de la masse suspendue. Dans ce but, on a utilisé pour remédier à cet inconvénient, un moyen de rappel élastique en roulis.

Les brevets DE—A—1.926.779 et DE—A—2.161.652 concernent bien des suspensions de cabines avec des moyens de statilisation en roulis; toutefois il s'agit de suspensions conventionnelles et très différentes de la suspension en trois points avec un point élastique central à basse fréquence suivant l'invention.

Conformément à l'invention, la soubassement de la cabine est suspendu en trois points sur la châssis dont un point à l'avant et deux points à l'arrière, le point central avant disposé dans le plan médian de la cabine, suspendu sur un élément de fréquence inférieure à 3 Hz, étant relié au châssis par un moyen de guidage du soubassement de la cabine et la cabine étant reliée au châssis par un moyen de rappel élastique en roulis.

Ce dispositif de suspension permet d'obtenir une amélioration très appréciable du confort par une réduction considérable de la fréquence propre à l'avant.

L'utilisation d'une suspension avant centrale favorise la présence de longerons droits et l'élévation du centre d'articulation, d'ou/ une diminution du couple de roulis.

Le dispositif permet de réduire au minimum dans la suspension le nombre de pièces en mouvement (suppléments de poids et de coût relativement faibles en regard du niveau de confort obtenu).

La répartition la plus favorable des efforts appliqués au soubassement de la cabine autorise ainsi des technologies de la structure cabine proches de celles utilisées dans l'industrie automobile courante.

L'augmentation de l'espace disponible pour l'implantation des diverses commandes reliées au poste de conduite est obtenue grâce à une localisation de l'élément élastique dans la zone libre située à l'extrémité centrale avant.

D'autres détails et avantages de l'invention seront mieux compris à la lecture de la description qui va suivre de plusieurs exemples de réalisation et en se référant aux dessins annexés, dans lesquels:

— la figure 1 est une vue en perspective d'un mode de réalisation du dispositif de suspension de cabine suivant l'invention;

— la figure 2 est une vue en élévation latérale du dispositif de suspension représenté à la figure 1;

— les figures 3 et 3a sont des vues en élévation de face du dispositif de suspension montrant la barre antiroulis;

— la figure 4 est une vue en perspective d'un autre mode de réalisation du dispositif de cabine suivant l'invention;

— la figure 5 est une vue en élévation latérale du dispositif de suspension avec un moyen de basculement à barre de torsion;

— la figure 6 est une vue en élévation latérale du dispositif de suspension avec un moyen de basculement par vérin.

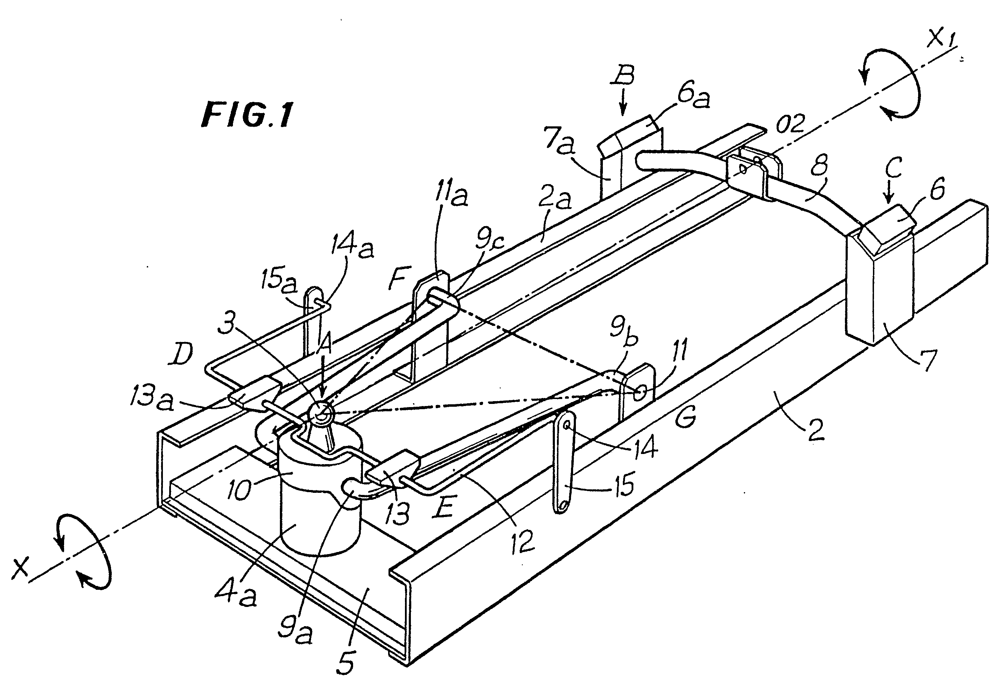

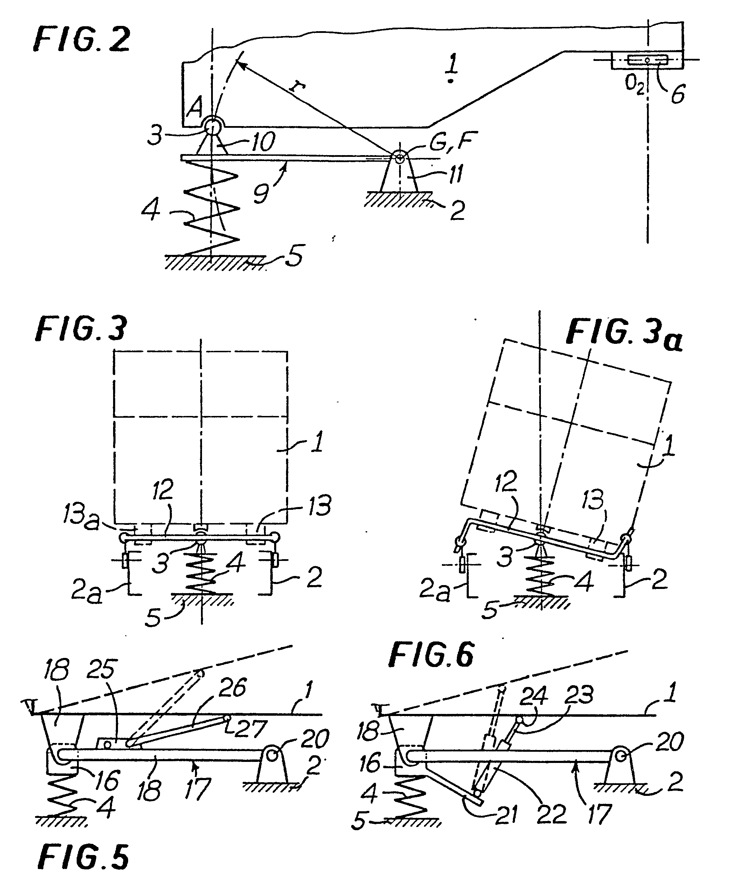

Aus figures 1, 2 et 3, on a représenté un mode de réalisation d'un dispositif de suspension d'une cabine 1 sur les longerons 2, 2a d'un châssis de véhicule. La suspension de la cabine sur le châssis est réalisée au moyen de trois points A, B, C, dont un point central A situé à l'avant du véhicule est constitué d'une articulation sphérique comprenant une rotule 3 reposant sur un organe élastique 4 de basse fréquence propre (figure 2) monté sur une traverse 5 reliant les deux longerons 2, 2a.

A la figure 1, on a représenté schématiquement l'organe élastique par son réceptacle 4a.

A l'arrière, le soubassement de la cabine 1 repose sur deux points de suspension constitués de blocs 6, 6a en matériau élastique, qui sont fixés sur des montants 7, 7a fixés respectivement sur les longerons 2, 2a et reliés par une traverse 8. Les deux points de suspension 6, 6a sont disposés symétriquement par rapport à l'axe de roulis xx₁ de la cabine 1.

Le guidage de l'ensemble est assuré par un organe triangulé rigide 9 dont le sommet 9a est solidaire d'un organe de support 10 de la rotule 3 par lequel elle repose sur l'organe élastique 4. La base de l'organe triangulé 9 comporte deux tourillons 9b, 9c qui sont articulés dans deux paliers 11, 11a solidaires des longerons 2, 2a du châssis.

Les mouvements angulaires transversaux de la cabine sont rappelés par une barre antiroulis 12 dont la partie centrale est articulée, au moyen de paliers 13, 13a, sur la cabine 1 et dont les extrémités 14, 14a sont articulées dans des paliers 15, 15a solidaires des longerons 2, 2a du châssis.

Lorsque la cabine 1 se déplace dans un plan longitudinal (figure 2), toute sollicitation verticale de la cabine 1 se traduit par un mouvement circulaire de centre (G, F) du point A de la cabine. Le rapport des distances A.(G, F) et A.02, ainsi que leurs positions relatives, sont prédéterminés pour limiter les déplacements longitudinaux du point 02.

Les mouvements de la cabine dans le plan transversal sont représentés aus figures 3, 3a. Toute prise de roulis de la cabine 1 est rappelée par la flexibilité angulaire de la partie active en torsion (D.E.) de la barre antiroulis 12.

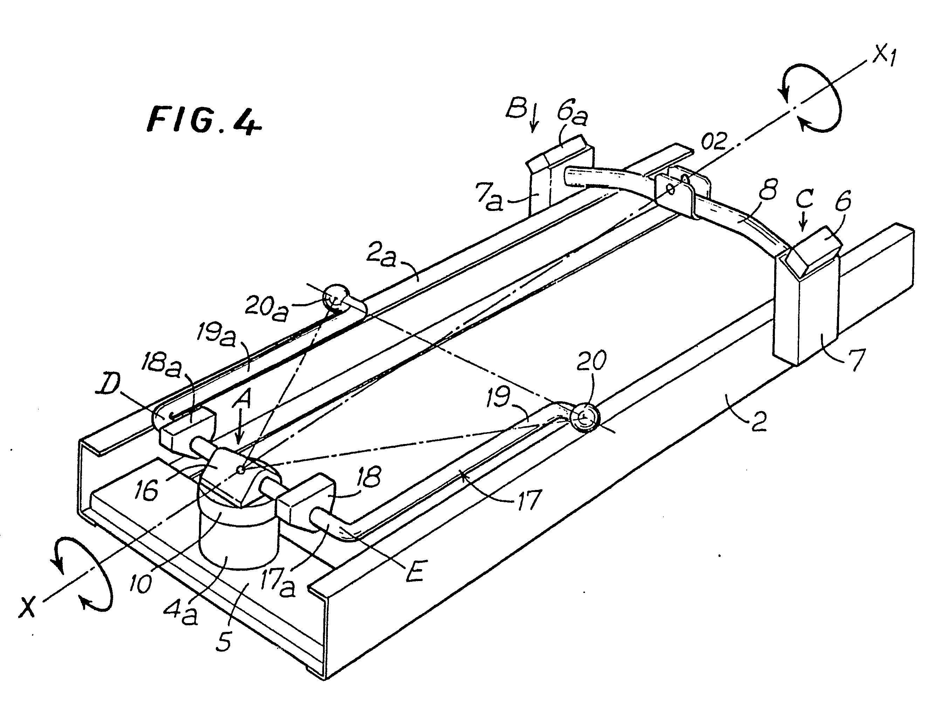

A la figure 4, on a représenté une variante de réalisation du dispositif de suspension de la cabine, dans lequel les deux fonctions antiroulis et guidage de la cabine, qui sont découplées dans le mode de réalisation de la figure 1, sont remplies dans ce cas par un seul et même organe. Le support 10 du point de suspension avant A comporte un palier 16 dans lequel est montée rotative une barre frontale 17a d'un organe 17 de guidage et de rappal élastique de dévers provenant du roulis. Cett barre frontale 17a est montée de façon articulée dans des paliers 18, 18a solidaires du soubassement de la cabine. L'organe 17 comporte également deux barres latérales 19, 19a qui sont articulées à leurs extrémités par des rotules 20, 20a sur les longerons 2, 2a.

La flexibilité angulaire des barres 19, 19a et des moeuds D et E, conditionnée par les impératifs de guidage, est telle que tout déplacement angulaire desdites barres engendre deux couples égaux et opposés aux extrémités de la barre frontale 17a. Celle-ci possède une flexibilité angulaire suffisante pour rappeler la cabine en dévers. La présence d'une suspension de la cabine nécessite une nouvelle conception du dispositif de basculement. En effet, celui-ci ne doit pas gêner les mouvements libres de la cabine.

A la figure 6, on a représenté un dispositif de suspension comportant un moyen de basculement hydraulique dans lequel le palier 16 solidaire de la barre frontale 17a est muni vers l'arrière d'un bras 21 sur lequel est monté, de façon articulée, le corps 22 d'un vérin hydraulique dont la tige 23 est articulée en 24 sur le soubassement de la cabine 1. Le vérin 22 fournit le couple nécessaire au levage de la cabine 1. Cette disposition, du type compas, est telle que le vérin en position de repos se débat en accord avec l'organe 17 de guidage et de rappel élastique de dévers.

A la figure 5, on a représenté un dispositif de suspension comportant un moyen de basculement par barres de torsion. Sur les barres sont ancrées en 25, à l'une de leurs extrémités, des barres de torsion 26 dont l'autre extrémité 27 est en appui contre le soubassement de la cabine 1. Ces barres de torsion 26 se débattent comme dans l'exemple précédent en accord avec l'organe de guidage 17.

Il est alors évident que toute sollicitation verticale de la partie avant du châssis 2, 2a sur la cabine 1 entraînera une déformation des barres de torsion 26, jouant alors le rôle de ressorts complémentaires de suspension.

**Revendications**

1. par un moyen de guidage (9) du soubassement de la cabine et la cabine est reliée au châssis (2, 2a) par un moyen d-pendu en trois points (3, 6, 6a) sur le châssis (2), dont un point à l'avant (3) et deux points à l'arrière (6, 6a), caractérisé en ce que le point central avant (3) disposé dans le plan médian de la cabine, suspendu sur un élément (4) de fréquence inférieure à 3 Hz et de préférence sensiblement égale à 1 Hz, est relié au châssis par un moyen de guidage (9) du soubassement de la cabine et la cabine est reliée au châssis (2, 2a) par un moyen de rappel élastique en roulis (12).

2. Dispositif suivant la revendication 1, caractérisé en ce que le point (A) de suspension central avant est constitué d'une articulation sphérique (3) reposant sur un organe élastique de basse fréquence inférieure à 3 Hz et de préférence égale à 1 Hz.

3. Dispositif suivant les revendications 1 et 2, caractérisé en ce que le moyen de guidage du soubassement de la cabine (1) est constitué d'un organe triangulé rigide (9) dont le sommet est solidaire de l'articulation sphérique (3) constituant le point de suspension avant et dont la base est articulée sur le châssis (2, 2a).

4. Dispositif suivant la revendication 1, caractérisé en ce que le moyen de rappel élastique de la cabine (1) en roulis est constitué par une barre élastique antiroulis (12) dont la partie centrale est articulée en (13, 13a) sur le soubassement de la cabine (1) et dont les extrémités sont articulées sur le châssis (2, 2a).

5. Dispositif suivant les revendications 1 et 2, caractérisé en ce que les moyens de guidage du soubassement de la cabine et de rappel élastique de la cabine en roulis sont constitués par un seul organe (17) comportant une barre frontale (17a) sur laquelle sont articulés l'organe de support constituant le point de suspension avant A et le soubassement de la cabine (1), ladite barre frontale (17a) étant reliée par deux barres latérales (19, 19a) au châssis (2, 2a) au moyen d'articulations à rotule (20, 20a), ladite barre frontale (17a) présentant une flexibilité angulaire suffisante pour rappeler la cabine en roulis.

6. Dispositif suivant les revendications 1 et 5, caractérisé en ce que la barre frontale (17a) est solidaire d'un bras (21) s'étendant vers l'arrière et sur lequel est monté un vérin hydraulique (22) dont la tige (23) est articulée sur le soubassement de la cabine (1) dont le basculement est assuré par ledit vérin (22).

7. Dispositif suivant les revendications 1 et 5, caractérisé en ce que, sur les barres latérales (19, 19a) sont ancrées (en 25) par l'une de leurs extrémités à proximité du point de suspension avant, des barres de torsion (26) dont l'autre extrémité (27) qui est libre, est en appui contre le soubassement pour le basculement de la cabine (1).

**Patentansprüche**

1. Vorrichtung zur Aufhängung einer Kabine auf dem Fahrgestell eines Fahrzeugs, bei welcher der Unterbau der Kabine (1) in drei Punkten (3, 6, 6a), nämlich einem Punkt (3) vorne und zwei Punkten (6, 6a) hinten, auf dem Fahrgestell (2) aufgehängt ist, dadurch gekennzeichnet, daß der vordere, in der Mittelebene der Kabine angeordnete und auf einem Element (4) mit einer Frequenz von weniger als 3Hz, vorzugsweise im wesentlichen gleich 1 Hz, schwebend gehaltene, zentrale Punkt (3) durch ein Führungselement (9) des Kabinenunterbaus mit dem Fahrgestell verbunden ist und die Kabine durch ein elastisches Rollbewegungsrückstellelement (12) mit dem Fahrgestell (2, 2a) verbunden ist.

2. Vorrichtung nach Anspruch 1, dadurch gekennzeichnet, daß der vordere, zentrale Aufhängungspunkt (A) durch ein Kugelgelenk (3) gebildet ist, welches auf einem elastischen Element mit einer niedrigen Frequenz von weniger als 3 Hz, vorzugsweise gleich 1 Hz, ruht.

3. Vorrichtung nach den Ansprüchen 1 und 2, dadurch gekennzeichnet, daß das Führungselement des Unterbaus der Kabine (1) durch ein starres Dreiecksorgan (9) gebildet ist, dessen Spitze mit dem den vorderen Aufhängungspunkt bildenden Kugelgelenk (3) verbunden und dessen Basis am Fahrgestell (2, 2a) angelenkt ist.

4. Vorrichtung nach Anspruch 1, dadurch gekennzeichnet, daß das elastische Rollbewegungsrückstellelement der Kabine (1) durch eine elastische Antirollbewegungsstange (12) gebildet ist, deren Mittelteil in (13, 13a) am Unterbau der Kabine (1) angelenkt ist und deren Enden am Fahrgestell (2, 2a) angelenkt sind.

5. Vorrichtung nach den Ansprüchen 1 und 2, dadurch gekennzeichnet, daß die Elemente zur Führung des Kabinenunterbaus und zum elastischen Rollbewegungsrückstellen der Kabine durch ein einziges Organ (17) gebildet sind, welches eine vordere Stange (17a) umfaßt, auf welcher das den vorderen Aufhängungspunkt A bildende Stützelement und der Unterbau der Kabine (1) angelenkt sind, welche vordere Stange (17a) über zwei seitliche Stangen (19, 19a) mittels Gelenklager (20, 20a) mit dem Fahrgestell (2, 2a) verbunden ist und eine Winkelflexibilität aufweist, die ausreicht, um die in Rollbewegung befindliche Kabine zurückzustellen.

6. Vorrichtung nach den Ansprüchen 1 und 5, dadurch gekennzeichnet, daß die vordere Stange (17a) mit einem sich nach hinten erstreckenden Arm (21) verbunden ist, auf welchem ein Hydraulikzylinder (22) montiert ist, dessen Kolbenstange (23) um Unterbau der Kabine (11) angelenkt ist, deren Kippen durch den Zylinder (22) gesichert ist.

7. Vorrichtung nach den Ansprüchen 1 und 5, dadurch gekennzeichnet, daß auf den seitlichen Stangen (19, 19a) Torsionsstäbe (26) mit einem ihrer Enden in der Nähe des vorderen Aufhängungspunktes verankert sind (in 25), wobei sich das andere Ende (27), welches frei ist, zum Kippen der Kabine (1) am Unterbau abstützt.

**Claims**

1. A device for suspending a cab on a vehicle chassis, in which the frame of the cabin (1) is suspended in three points (3, 6, 6a) on the chassis (2) one point being at the front (3) and two points at the rear (6, 6a), characterized in that the front central point (3) which is disposed in the median plane of the cab and suspended on a member (4) of frequency less than 3Hz and preferably substantially equal to 1 Hz, is connected to the chassis by a means (9) for guiding the cab frame and the cab is connected to the chassis (2, 2a) by a rolling-control elastic means (12).

2. A device according to claim 1, characterized in that the suspension central front point (A) consists of a spherical joint (3) resting on a resilient member of low frequency less than 3 Hz and preferably equal to 1 Hz.

3. A device according to claims 1 and 2, characterized in that the means for guiding the frame of the cab (1) consists of a rigid triangulated member (9) of which the top is integral with the spherical joint (3) constituting the front suspension point and of which the base is pivotally mounted on the chassis (2, 2a).

4. A device according to claim 1, characterized in that the cab (1) rolling-control elastic means is constituted by a rolling-control elastic bar (12) of which the central part is pivotally mounted in (13, 13a) on the frame of the cab (1) and the ends of which are pivotally mounted on the chassis (2, 2a).

5. A device according to claims 1 and 2, characterized in that the means for guiding the cab frame and the rolling-control elastic means are constituted by a single member (17) comprising a front bar (17a) on which are pivotally mounted the support member constituting the front suspension point A and the frame of the cab (1), said front bar (17a) being connected by two side bars (19, 19a) to the chassis (2, 2a) by a swivel joint means (20, 20a) said front bar (17a) having sufficient angular flexibility to control the rolling movement of the cab.

6. A device according to claims 1 and 5, characterized in that the front bar (17a) is integral with an arm (21) extending rearwardly and having mounted thereon a hydraulic jack (22) whose rod (23) is pivotally mounted on the frame of the cab (1), the pivoting movement of which is controlled by said jack (22).

7. A device according to claims 1 and 5, characterized in that torsion bars (26) are anchored (in 25) on the side bars (19, 19a) by one of their ends adjacent the front suspension point, their other free end (27) resting against the frame for the pivoting movement of the cab (1).

**FIG.1**

FIG.2

FIG.3

FIG.3a

FIG.5

FIG.6

FIG.4

0 019 498